# EUROPEAN PATENT APPLICATION

(11) **EP 1 688 475 A1**
(43) Date of publication of application: **09.08.2006**
(21) Application number: 06388005.8
(22) Date of filing: 03.02.2006
(51) Int. Cl.: C10L 5/42, C10L 5/40, C05F 9/00, C02F 11/12

(54) **A method of treating manure slurry, a fibrous product produced from manure slurry, uses of such a fibrous product**

(30) Priority: 03.02.2005 DK 200500165
(71) Applicant: Samson Bimatech I/S, 8800 Viborg (DK)
(72) Inventor: Brauer, Peter Dirk, 8860 Ulstrup (DK)
(74) Representative: Nilausen, Kim

(57) **Abstract**

A method of treating manure slurry, a fibrous product produced from manure slurry, uses of such a fibrous product, and a method of utilising mineral constituents and phosphorus and nitrogen compounds enclosed in the solid, fibrous fraction of manure slurry.

A method of treating a material consisting of manure slurry comprising a fibrous phase and an aqueous phase, said method comprising the steps of
a) separating the manure slurry into a fraction containing an enriched amount of fibres and a water fraction consisting essentially of water,
b) drying said fibre fraction to a content of solid dry matter of at least 75%, and
c) compressing the dried fibre fraction to form pellets having a density between 400kg/m³ and 800kg/m³ provides a product which fulfils the regulatory requirements for being acceptable as commodities and which furthermore provides an advantageous source of fuel, fertilizers and feed supplement for domestic animals.

## Description

### BACKGROUND OF THE INVENTION

### 1. Field of the Invention

The present invention relates to a method of treating manure slurry for providing a compressed fibre fraction, a compressed fibrous product produced from manure slurry, uses of a compressed fibrous product produced from manure slurry as fuel or as a fertilizer, and a method of isolating mineral constituents and phosphorus and nitrogen compounds enclosed in the solid, fibrous fraction of manure slurry.

Over the past years the animal production in the economically stronger countries of the European Union has increased to such an extent that it has resulted in a heavy environmental strain from noxious smells and emission of dust and ammonia and phosphorous.

Manure slurry, especially manure slurry from pigs, forms an increasing problem for many farmers, especially for pig farmers. Neighbours often complain about the smell from manure and as a result of such complaints, the farmers are often constrained in increasing the production.

Furthermore, governmental regulations set continually more restrictive limits for the number of animals a farmer is allowed to have on a farm with a given agricultural area and also stipulate conditions for allowing trading manure slurry or products made from manure slurry. Among these regulations are limits on how and when the farmer is allowed to spread the manure on his agricultural area. In certain countries it is not even allowed to spread the manure and therefore the farmer has to get rid of the manure in other ways. These limits cause increasing challenges, e.g. call for increased storage tanks for the manure slurry and often tight regulations for how to store and handle the manure slurry.

During the last five years the contents of phosphorous has become the limiting factor for spreading of manure. The major part of the phosphorous (about 70%) is attached to the solid or fibrous part of the manure and hence, it has been proposed to remove the solid parts of manure slurry in order to provide a liquid phase depleted of phosphorous for spreading to the soil.

If a farmer intends to increase the number of animals on his farm, he has to increase his agricultural area or be able to treat his manure without hampering his neighbours or the environment. This option may be restricted for practical reasons or by regulatory requirements and hampers the development of the pig breeding farms into larger and more economic units.

In the manure there are substantial amounts of substances suitable in fertilizers and that can be used as substitutes for commercially available fertilizers. By isolating these substances from the manure in an essentially smell free form it would be possible for the farmer to save expenses to commercial fertilizers and minimize the stored amount of manure. Furthermore, the fibre fraction of manure comprises a substantial amount of energy which may now be utilized on the farm. However, the amount of energy present in the fibre fraction often exceeds the need of the farmer and the utilization of the energy by the farmer himself and also any "export" of energy-rich products made from manure slurry from the farm are also subject to strict regulatory requirements.

In order to overcome these restrictions there is a need for new methods of treating manure slurry for making products therefrom in an economically and environmental unobjectionable manner complying with the restrictions imposed by the regulatory requirements so that these products may be made into commodities.

### 2. Description of the Related Art

EP 1 182 248 A1 discloses a method of processing animal manure comprising drying the manure, subjecting the manure to gasification thereby yielding a combustible gas mixture, purifying the gas mixture and cracking the gas mixture. The gasification is carried out at temperatures well above 600°C in order to avoid tar production. This method is mainly suitable in processing relatively dry manure such as manure from chickens.

In an article entitled "Gylleseparator giver renere miljø" (Manure Slurry Separator Provides a Cleaner Environment) in Ingeniøren, Friday 14.6.02, number 24 page 14, is disclosed a process for treating manure wherein the manure is separated in a fibre fraction and a manure water fraction, said manure water fraction being degassed by heating. The gas is purified for fatty acids and the remaining manure water fraction is concentrated. In this process which is merely a concentration process the energy rich fibre fraction is just left unused and the energy in the fatty acids as well.

Drying manure with relatively high water content requires too much energy to be economically attractive.

Applicant's own WO 2004/046279 discloses a process which in a cheap and easy way can process both water rich and water poor manure.

WO 2004/046279 discloses a method of treating manure wherein the manure is subjected to separation in a fibre fraction and a manure water fraction; said fibre fraction is dried and subjected to gasification; said manure water fraction is subjected to concentration and the produced gasses from said gasification and said concentration are collected and optionally combusted; and optionally the manure water fraction is subjected to thermal degradation. WO 2004/046279 discloses that by processing manure slurry in the above mentioned manner sufficient energy is generated to allow the above mentioned processes to be performed without the supply of external energy but is silent with respect to utilization of surplus energy. According to WO 2004/046279 nitrogen and phosphorous may be separated using scrubbers for capturing nitrogen evaporated from the liquid phase during heating and phosphor liberated from the fibrous fraction during gasification.

This reference, however, is silent with respect to utilization of surplus energy and the problems associated with turning manure slurry into products which may be made into commodities.

DE 44 41 393 A1 discloses the manufacture of briquettes from sewage sludge and a binding agent such as lime, said briquettes having a density of from 1200 to 1700 kg/m³ and further high temperature gasification for forming synthesis gas and slag comprising cinder of heavy metals. High temperature gasification will give rise to formation of NOx which will have to be dealt with for environmental reasons. Furthermore, the raw materials contribute with i.a. heavy metals requiring depositing of the slag at a controlled site.

FR 2 262 104 A relates to odour free burning of livestock manure obtained by burning a briquettes comprising manure and a binding agent in the form of a residue from distillation of oil such as paraffin, said briquettes having a density of from 480 to 1120 kg/m³. The briquettes have a content of binding agent of about 40% in order to ensure in order to ensure an odour free burning.

WO 81/03029 A1 discloses a system for converting waste materials including solid refuse into useful products for fuel and agriculture applications. A mixture of solid refuse and sewage sludge is compacted to form regular blocks for aerobic fermentation. Cellulosic and fibrous materials are added as binders for maintaining a structural integrity. The blocks having a density from 480 tom 640 kg/m³ (30-40 pounds per cubic foot) are stacked and left for aerobic fermentation and thermal rotting during which the blocks are self-dehydrated to a moisture content in the range from about 15-40% by weight and the remains may be used for combustion purposes.

The requirements for an environmentally desirable treatment of manure slurry are inter alia:
a) a considerable reduction of the level of noxious smells,
b) better utilization of the nutritious substances,
c) observation limitations on phosphorous content
d) each animal production should have a closed circle of nutritious substances
e) inactivation of all disease germs
f) inactivation of all weed seeds
g) during spreading manure no bioaerosols, fungus spores or dust may be stirred up, and
h) it should be aimed at preventing the nutritious substances comprised in the manure from leaching out into marine areas or into the ground water where it is now found as pollution by nitrate.

Item g) implies that the manure must be rapidly absorbed into the soil and that the solid matter must be removed.

Item h) implies that nutritious substances comprised in the manure is converted into long-acting fertilizers.

It has been found that when treating manure or the degassed residuum from biogas production in accordance with the present invention, products are obtainable which fulfil the regulatory requirements for being acceptable as commodities and which furthermore provides an advantageous source of fuel, fertilizers and feed supplement for domestic animals.

### SUMMARY OF THE INVENTION

The present invention relates to a method of treating a material consisting of manure slurry comprising a fibrous phase and an aqueous phase, said method comprising the steps of
a) separating the manure slurry into a fraction containing an enriched amount of fibres and a water fraction consisting essentially of water,
b) drying said fibre fraction to a content of solid dry matter of at least 75%, and
c) compressing the dried fibre fraction to form pellets having a density between 400kg/m³ and 800kg/m³.

In a second aspect the invention relates to a fibrous product consisting of fibres separated from manure slurry and having been compressed to a density between 400kg/m³ and 800kg/m³.

In a third aspect the invention relates to the use of a fibrous product consisting of fibres separated from manure slurry and having been compressed to a density between 400 kg/m³ and 800 kg/m³ as fuel in a boiler.

In a fourth aspect the invention relates to the use of a fibrous product consisting of fibres separated from manure slurry and having been compressed to a density 400 kg/m³ and 800 kg/m³ as a fertilizer.

In a fifth aspect the invention relates to a method of utilising constituents and phosphorus and nitrogen compounds enclosed in the solid, fibrous fraction of manure slurry comprising the steps of
a) separating the manure slurry into a fraction containing an enriched amount of fibres and a water fraction consisting essentially of water,
b) drying and compressing the fibre fraction to a density 400 kg/m³ and 800 kg/m³,
c) burning the dried and compressed fibre fraction a temperature above 600°C, and
d) collecting the ashes and using the ashes as a fertilizer.

### Brief Description of the Drawings

The invention is disclosed more in detail with reference to the drawings in which
figure 1 shows a flow chart of the fibre fraction in accordance with the broadest aspect of the invention,
figure 2 shows a flow chart of the fibre fraction in accordance with a general embodiment of the method of the invention,
figure 3 shows a flow chart of the fibre fraction in accordance with a further embodiment of the method of the invention, and
figure 4 shows a flow chart of the main process units of a plant for carrying out the method of the invention.

### Detailed Description of the Present Invention

The present invention relates in its broadest aspect to a method of treating manure slurry comprising a fibrous phase and an aqueous phase, said method comprising the steps of
a) separating the manure slurry into a fraction containing an enriched amount of fibres and a water fraction consisting essentially of water,
b) drying said fibre fraction, and compressing the fibre fraction to a density above 400kg/m³.

The present invention relates to a method of treating a material consisting of manure slurry comprising a fibrous phase and an aqueous phase, said method comprising the steps of
a) separating the manure slurry into a fraction containing an enriched amount of fibres and a water fraction consisting essentially of water,
b) drying said fibre fraction to a content of solid dry matter of at least 75%, and
c) compressing the dried fibre fraction to form pellets having a density between 400kg/m³ and 800kg/m³.

It has been found that when compressing the dewatered and dried fibre fraction of manure to a density between 400 and 800kg/m³ it is possible to produce a coherent product in which individual fibres will not be released during normal handling or burning of thereof in a boiler and thus not requiring removal of particles from the flue gas.

Furthermore, it has been found that the addition of binding agents for ensuring structural integrity or sufficient calorific value is not necessary, even when treating manure from cattle having a lower calorific value than manure from pigs in accordance with the method of the invention although manure from cattle typically has a content of dry matter of 20 - 30% as opposed to a content of dry matter typically below 10% for pigs as cows ferment some of the fibrous constituents of the food passing through the alimentary tract of pigs.

Still further it has been found that using the method of the invention, manure slurry or liquid manure from pigs having a very low content of dry matter may be processed directly without any initial dewatering and without having to add further dry matter or binding agents

In a preferred embodiment of the invention manure from cattle or pigs is treated, preferably manure slurry from pigs.

It is preferred to separate the fibre fraction of manure in a condition wherein the content of solid dry matter is above 40%. This renders it possible to burn the fibre fraction without addition of further energy in the form of other waste.

It is preferred to compress the fibre fraction to a density above 600kg/m³ when the compressed fibrous product is to be used as a fuel.

The compressed fibre product may e.g. be in the form of pellets or in the form of compressed flakes or compressed rods, preferably in the form of pellets. The compressed fibre product of the invention preferably has a size from 2 to 8 millimetres, more preferred from 4 to 6 millimetres as products of these sizes will burn or gasify more readily than larger pieces of fuel.

It is preferred to dry the fibre fraction to a content of moisture below 60% giving a content of dry matter of above 40% in step a). Thus, the resulting product may be used as fuel in a boiler and also as a stable fertilizer which does not give rise to the onset of putrefaction or composting of the fibre fraction during storage. Furthermore it has been found that the resulting product acts as a long-acting fertilizer being stable against quick leaching out of phosphorous, e.g. in wet weather conditions and migration into marine areas or into the ground water.

According to the invention it is preferred that the action of heat in step b) and/or step c) is sufficient to inactivate disease germs, fungus spores, and weed seeds.

In order to obtain this objective it is preferred to subject the fibre fraction a temperature above 70°C for a time sufficient to inactivate disease germs, fungus spores, and weed seeds, typically for 1 hour providing the needed action of heat and further ensuring decomposition of organic matter which might give rise to noxious smells. Suitably, the drying is carried out at a temperature above 95°C, preferably the manure water fraction is heated to above 120°C, more preferably the water fraction is heated to above 140°C, most preferably the manure water fraction is heated to between 140°C and 160°C.

When using a higher temperature, the time needed for providing the needed action of heat is reduced, and when using a temperature of about 120°C, only a time of about 1½ to 10 minutes is needed.

During this thermal decomposition a small amount of combustible gas, which may be used as a fuel in the plant, may be produced. In a preferred embodiment this step is performed at an elevated pressure.

In one embodiment of the invention, the dried and compressed fibre fraction is subjected to gasification at a temperature above 500°C and below 800°C to form a combustible mixture of gasses which may be used as disclosed in WO 2004/046279.

When burning the compressed fibre fraction according to the invention it is preferred that the dried and compressed fibre fraction is burnt at a temperature above 500°C and below 800°C and preferably at a temperature above 600°C by which temperature the phosphorous content of the fibre fraction is retrieved in the ash in the form of compounds showing long-acting fertilizers being stable against leaching out of phosphorous, e.g. in wet weather conditions and migration into marine areas or into the ground water. Furthermore at these temperatures ashes and not a slag which would have to be deposed is obtained as the remains. Furthermore the heating surfaces are not coated by a slag. In a preferred embodiment of the invention the burning of the compressed fibre fraction according to the invention is preferably carried out at atmospheric pressure.

In a preferred embodiment of the invention the ashes resulting from burning the compressed fibre fraction are collected.

In a preferred embodiment the heat used for heating the water fraction to an elevated temperature is generated from burning the dried and compressed fibres.

It is preferred to combine the evaporated product from drying the fibre fraction with the water fraction.

In a second aspect the invention relates to a fibrous product consisting of fibres separated from manure slurry and having been compressed to a density between 400 kg/m³ and 800 kg/m³.

The fibrous preferably has a density above 600kg/m³ when the compressed fibrous product is to be used as a fuel and may e.g. be in the form of pellets or in the form of compressed flakes or compressed rods, preferably in the form of pellets.

As stated above, it is preferred that the fibre fraction has a content of moisture below 40%.

In a third aspect the invention relates to the use of a fibrous product consisting of fibres separated from manure slurry and having been compressed to a density between 400 kg/m³ and 800 kg/m³ as fuel in a boiler. It has been found that the fibres of such a product will not be released during normal handling or burning of thereof in a boiler and thus, it is not necessary to use flu gas purification equipment such as cyclones for catching fine particles or dust.

In accordance with a fourth aspect of the invention a fibrous product consisting of fibres separated from manure slurry and having been compressed to a density between 400 kg/m³ and 800 kg/m³ is used as a fertilizer. As stated above, the fibrous product of the invention has been found to be a long-acting fertilizer being stable against leaching out of phosphorous, e.g. in wet weather conditions and migration into marine areas or into the ground water.

The compressed fibre fraction of the invention fulfils the below requirements for being an economically and environmentally favourable product:
1. Stable for storage without onset of putrefaction or composting of the fibre fraction,
2. Low storage volume
3. No emission of dust to the environment during spreading,
4. Spreading may be performed using simple agricultural dosing machines
5. safe killing of disease germs and fungus spores, and
6. very low costs for transportation.

For the above uses it is preferred that the fibres have been subjected to a temperature above 70°C for a time sufficient to inactivate disease germs, fungus spores, and weed seeds.

In a fifth aspect the invention relates to the use of the ashes remaining when burning, at a temperature above 600°C, a fibrous product consisting of fibres separated from manure slurry and having been compressed to a density between 400 kg/m³ and 800 kg/m³ as a fertilizer.

The ashes comprise the phosphorous content of the fibre fraction in the form of compounds showing long-acting fertilizers being stable against quick leaching out of phosphorous, e.g. in wet weather conditions and migration into marine areas or into the ground water.

In a sixth aspect the invention relates to the use of the ashes remaining when burning, at a temperature above 600°C, a fibrous product consisting of fibres separated from manure slurry and having been compressed to a density above 400kg/m³ as a feed supplement for domestic animals.

The ashes comprise large amounts of essential minerals needed in feed for domestic animals and may be admixed with conventional feed as a source of these minerals. As the ashes originate from a pure product from livestock without any further added materials, the use thereof as a food additive is not objectionable for the reason of admixture of environmentally undesirable waste components.

In order to utilize the ash as a fertilizer it has been found suitable to compress the ash to pellets or to form granules in order to avoid dusting when spreading the fertilizer. Such treatment also facilitates the handling and transportation of the ash. The ash may be used directly as a fertilizer. The ash may also be used as a raw material for manufacturers of fertilizers and may be incorporated in fertilizers known per se.

It is also considered an embodiment of the invention to provide a fertilizer in a compressed form comprising isolated fibre fraction as well as ash being generated from burning the compressed fibre fraction according to the invention.

When considering the use of the ash as a fertilizer the regulatory requirements concerning limits and norms for the content of e.g. cadmium, chromium, mercury, and nickel which are often found in fly ash and it is considered a preferred embodiment of the invention to use starting material purely of agricultural origin. Thus it is avoided that cadmium, chromium, mercury or nickel compounds which e.g. might be present in the degassed residue fibrous fraction resulting from industrial biogas production are introduced into the manure slurry and the products made therefrom which might bar the use of the products as fertilizers or feed supplement on the same farm or the export thereof to other users.

In a seventh aspect the invention relates to a method of isolating mineral constituents and phosphorus and nitrogen compounds enclosed in the solid, fibrous fraction of manure slurry comprising the steps of
a) separating the manure slurry into a fraction containing an enriched amount of fibres and a water fraction consisting essentially of water,
b) drying said fibre fraction, and
c) compressing the dried fibre fraction to a density above 400kg/m³,
d) burning the dried and compressed fibre fraction a temperature above 600°C, and
e) collecting the ashes.

It is to be noted that although the present invention has been explained with reference to treatment of manure slurry, the use of other starting materials such as the degassed residue from biogas production is also considered a part of the present invention. Manure slurry is intended to comprise biomasses being transportable using e.g. pumps or screws and having a content of dry matter above 4-8%. Such biomasses may e.g. be poultry manure or manure from cows or pigs.

According to the invention, manure slurry or degassed residue may be converted to a fuel which may be burnt in standard equipment without taking special measures with respect to flu gas purification. The processing may be carried out in standard equipment such as a filtering unit combined with a compression unit using e.g. a press such as a pellet press or using a screw or a helical conveyer designed to compress the product to a sufficient degree to fulfil the above-mentioned demand. A special drying step and equipment therefore may be avoided. The ashes resulting from burning such fibrous product will due to the high calorific value thereof contain the phosphorous compounds and be used as a fertilizer as explained above.

### Description of the Preferred Embodiments

The invention is now explained more in detail with reference to the drawings showing preferred embodiments of the invention.

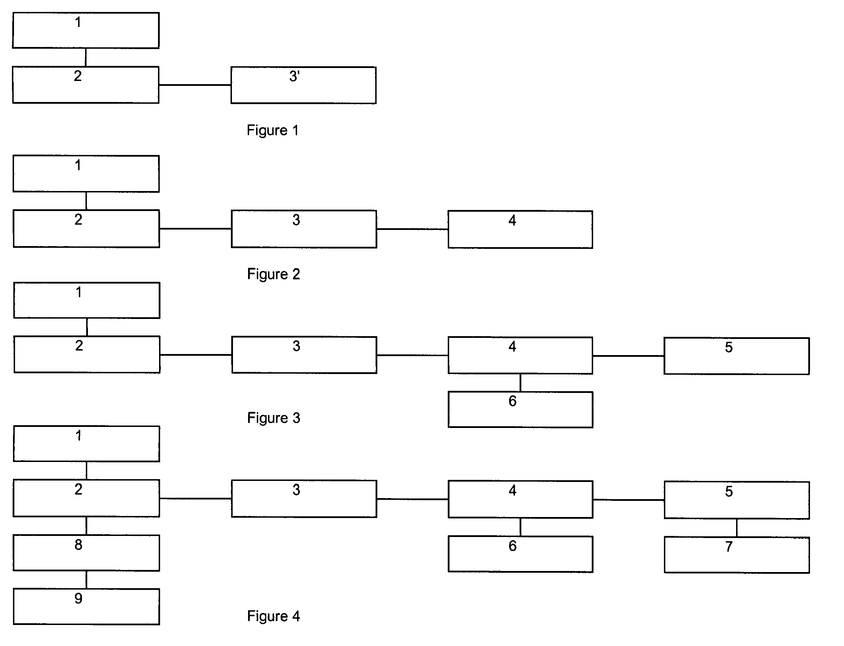

Figure 1 shows a flow chart of the fibre fraction in accordance with the broadest aspect of the invention, wherein manure slurry **1** first is separated into a fraction containing fibres and a first water fraction in a filtering unit **2.** The fibre fraction is then dried and compressed in a compression unit **3'** to a density above 400kg/m³.

Figure 2 shows a flow chart of the fibre fraction in accordance with a general embodiment of the method of the invention, wherein manure slurry **1** first is separated into a fraction containing fibres and a first water fraction in a filtering unit **2.** The fibre fraction is then dried inn a drier **3** and compressed in a compression unit **4** to a density above 400kg/m³.

Figure 3 shows a flow chart of the fibre fraction in accordance with a further embodiment of the method of the invention in which, in addition to figure 2, is shown that the compressed fibre fraction may either be burnt in an oven or boiler **5,** e.g. for provide the heat needed for the processes in the method, or be used as a commodity **6** for sale. The method of the present invention enables a sale as it is ascertained that all disease germs, fungus spores, and weed seeds are inactivated in compliance with the regulatory requirements.

The dried and compressed fibre fraction may alternatively be subjected to gasification in a gasification step as disclosed in WO 2004/046279, by use of heat from the burned combustible gasses. The gasification results in residue (pyrolysis coal) and a combustible gas. The water fraction from the separation unit (2) may be subjected to heat resulting in a combustible gas fraction and a second water fraction. The combined combustible gasses and optionally the residue from the gasification may then be burnt in an oven thereby providing heat for the drying, the gasification and the heat treatment of the first water fraction. It is preferred to use the hot second water fraction to pre-heat the first water fraction. The combustion of said residue results in a small amount of ashes.

The ashes from the gasification may, if desired, furthermore be refined by galvanic refining for separation of copper, zinc and nickel as disclosed in WO 2004/046279, if such elements are present.

The combustible gasses may be purified by scrubbing as disclosed in WO 2004/046279. The gasses are then first scrubbed in a first scrubber with Ca(OH)₂ resulting in a mixture of Ca(H₂SO₄)₂ and CaCO₃. Secondly the gasses are scrubbed in a second scrubber with H₂SO₄ resulting in (NH₄)₂SO₄ and K₂SO₄ and a purified gas mixture. This scrubbing sequence can be performed on the each of the combustible gas mixtures before combining or the scrubbing can be done on the combined gas mixture.

Figure 4 shows a flow chart of the main process units of a plant for carrying out the method of the invention. In the plant manure slurry **1** is first separated into a fraction containing fibres and a first water fraction **8** in a filtering unit **2.** The fibre fraction is then dried in a dryer **3** and compressed in a compression unit **4** to a density above 400kg/m³. The compressed fibre fraction may either be burnt in an oven or boiler **5,** e.g. for provide the heat needed for the processes in the method, or be used as a commodity **6** for sale. In the preferred embodiment, the burning of the compressed fibre fraction is carried out at a temperature above 500°C ensuring that especially the phosphorous is bound in the ash fraction **7** in the form of long-acting compounds which may be used as a fertilizer. The first water fraction form the filtering unit **2** is heated in a boiler **8** at elevated pressure.

During this heating thermal degradation of fatty acids etc takes place. After the degradation the manure water fraction 9 is concentrated is an evaporator resulting in a concentrated potassium fraction and a mixture of combustible gasses and steam. Said mixture may be purified in a sequence as disclosed in WO 2004/046279. It is preferred to operate a plant for carrying out the method of the invention under an underpressure and to take the gasses drawn from the process units to the burner or oven for heat degradation of compounds which might cause emission of smell.

The gasses obtained from a gasification may be scrubbed twice, first with Ca(OH)₂ and secondly with H₂SO₄ and then directed to an oven where they are burned thus creating heat for the process. The ashes from the gasification are subjected to galvanic purification.

The practising of the method of the present invention will be explained more in detail below with reference to the main process steps thereof.

### The separation step

The separation of manure slurry into a fraction containing an enriched amount of fibres and a water fraction consisting essentially of water may be carried out in a manner known per se.

In a preferred embodiment of the invention the manure slurry is separated in a fibre fraction and a first water fraction by mechanical means e.g. a centrifuge such as a decanter centrifuge or a press. In an even more preferred embodiment vacuum is used to aid the separation. Optionally a flocculation agent such as alumina based electrolytes, sulphate compounds, polyelectrolytes and humin based compounds; bases such as Ca(OH)₂ or acids such as H₂SO₄ can be added to the manure in order to support a quantitative separation of the fibre fraction. Furthermore micro bubbles can be used to facilitate the separation.

### The drying step

The fibre fraction from the separation step is dried preferably by means of heat. Preferably the fibre fraction is dried in a manner known per se to a dry solid matter content of at least 75%, preferably to a dry solid matter content of at least 80%, more preferred to a dry solid matter content of at least 85%, and most preferred to a dry solid matter content of at least 95% in order to improve the caloric value thereof and the risk of the onset of a putrefaction or composting of the fibre fraction which might give rise to obnoxious smells.

In a preferred embodiment the drying is performed by means of a combination of heat and vacuum.

The drying zone may e.g. be designed to ensure that all solid matter is in continuous contact with a very hot surface and immediately after carried into a space where the heat may evaporate the water whereafter the solid matter is again brought flung into contact with the hot surface and the process is repeated. Thus, all disease germs, fungus spores, and weed seeds are safely inactivated.

In another embodiment an Archimedes screw is used during the drying process, thereby achieving a continuous transportation of the fibre fraction through the drier.

Preferably the evaporated product from the drying process is combined with the first water fraction before a heating step, preferably in an intermediate storage tank, during a concentration of the water fraction. According to the invention it is also envisaged that combustible gasses comprised in said evaporated product are isolated and condensed or used as fuel.

In another embodiment of the invention the evaporated product is treated in at least one scrubber yielding a combustible gas and a condensate which may be disposed or utilized, e.g. as a fertilizer.

The drying step is preferably carried out at a temperature above 70°C for a time sufficient to inactivate disease germs, fungus spores, and weed seeds, typically for 1 hour providing the needed action of heat. Suitably, the drying is carried out at a temperature above 95°C, preferably the manure water fraction is heated to above 120°C, more preferably the water fraction is heated to above 140°C, most preferably the manure water fraction is heated to between 140°C and 160°C. When using a higher temperature, the time needed for providing the needed action of heat is reduced, and when using a temperature of about 120°C, only a time of about 1½ to 10 minutes is needed.

### The Compression Step

The compression of the fibre fraction according to the invention may be carried out in a manner known per se using suitable compression equipment such as a tablet compressing machine, squeezing rollers or an extruder.

In a preferred embodiment a pressing machine for producing pellets at a pressure sufficient to produce pellets having a density above 400kg/m³ is used.

A suitable pressing machine is a of the flat die type pelletting press such as a Flat Die Pellet Press type 14-175 from Amandus Kahl GmbH & Co. KG, Dieselstrasse 5, D-21465 Reinbek, Germany.

In one embodiment of the invention the separated fibre fraction is compressed directly without intermediate drying to a density above 400kg/m³ if the content of water is sufficiently low for allowing such a compression.

During compression the temperature will automatically rise and in most cases the action of heat thus provided is sufficient to inactivate disease germs, fungus spores, and weed seeds without further supply of heat. If needed, a supply of heat is preferably obtained from burning of a part of the compressed fibre fraction and/or gasses in the plant.

### The Boiling step (thermal degradation)

In a preferred embodiment of the method the manure water fraction is heated at a temperature above 70°C for a time sufficient to inactivate disease germs, fungus spores, and weed seeds in order to thermally decompose organic matter which may give rise to noxious smells. The boiling step is suitably carried out as disclosed in W02004/046279.

The boiling is preferably carried out at an elevated pressure using a pressure boiler ensuring that a very large part or most of the smell generating compounds are thermically degraded. Furthermore, it is preferred to carry the gas phase from the boiler which phase may also comprise smell generating components to the burner or oven for heat degradation of such components.

In a preferred embodiment acid or base is added to the water fraction in order to aid the thermal decomposition of organic matter and to kill possible bacteria. Preferred acids are strong acids such as H₂SO₄ and preferred bases are strong bases such as KOH, Ca(OH)₂. In a particularly suitable embodiment the pH is kept above 11 during the boiling.

Addition of acid in this step keeps ammonia in solution and thereby providing the option of a later separation, if desired.

The water fraction is preferably concentrated and preferably under reduced pressure. This concentration can be performed in commercially available evaporators. In a preferred embodiment the evaporator reuses the heat in the generated steam to further evaporation, as easily recognized by the skilled person.

In a preferred embodiment the hot water from the concentration is used to heat the production facility e.g. a piggery or a house.

In a preferred embodiment the exit water is adjusted to a temperature between 85°C and 95°C in a manner known per se.

In a preferred embodiment the gases from the concentration are scrubbed with acid and base as previously described.

In a preferred embodiment the hot water from the concentration is used to preheat the first water fraction.

### The burning step

In an embodiment of the method of the invention wherein burning of the compressed fibre fraction is carried out at a temperature between about 500°C and 800 °C, preferably about 600°C, a gas is produced comprising i.a. phosphorous comprised in the fibre fraction. Burning at these temperatures minimises the formation on NOx to a degree not requiring subsequent measures the removal thereof. Such gas is preferably purified, preferably by use of at least one scrubber. In a more preferred embodiment the gas is purified in two sequential scrubbing processes e.g. by first scrubbing with base such as Ca(OH)₂ or KOH in a first scrubber and afterwards scrubbing with H₂SO₄ in a second scrubber. The output of the scrubbing processes is one or more of the following compounds Ca(H₂PO₄)₂, CaCO₃, K₂SO₄, (NH₄)₂SO₄, Ca(HSO₄)₂, KHSO₄ and K₂CO₃. These compounds can be used as commercial fertilizers.

In a preferred embodiment of the invention, the burning of the compressed fibre fraction is carried out at a temperature between above 600°C in which case the phosphorous comprised in the fibre fraction will be retrieved in the ash.

The burning may be performed in a manner known per se using a burner or boiler known per se and being suitable for burning solid fuel.

## Claims

1. A method of treating a material consisting of manure slurry comprising a fibrous phase and an aqueous phase, said method comprising the steps of
a) separating the manure slurry into a fraction containing an enriched amount of fibres and a water fraction consisting essentially of water,
b) drying said fibre fraction to a content of solid dry matter of at least 75%, and
c) compressing the dried fibre fraction to form pellets having a density between 400kg/m³ and 800kg/m³.

2. A method according to claim 1 wherein the action of heat in step b) and/or step c) is sufficient to inactivate disease germs, fungus spores, and weed seeds.

3. A method according to claim 1 or 2, wherein the dried and compressed fibre fraction is subjected to gasification at a temperature above 500°C and below 700°C to form a combustible mixture of gasses.

4. A method according to any of claims 1-3, wherein the dried and compressed fibre fraction is burnt at a temperature above 500°C and below 800°C.

5. A method according to any of claims 1-3 further comprising the steps of d) burning the dried and compressed fibre fraction a temperature above 600°C and below 800°C,
e) collecting the ashes.

6. A method according to claim 5 further comprising the step of
f) isolating mineral constituents and phosphorus and nitrogen compounds enclosed in the solid, fibrous fraction of manure slurry.

7. A method according to any of claims 1-6 further comprising the step of heating the water fraction to an elevated temperature above 70°C for a time sufficient to inactivate disease germs, fungus spores, and weed seeds using the heat generated from burning the dried and compressed fibres.

8. A method according to any one of claims 1-7, wherein the evaporated product from said drying step is combined with the water fraction.

9. A fibrous product consisting of fibres separated from manure slurry and having been compressed to a density between 400kg/m³ and 800kg/m³.

10. The use of a fibrous product consisting of fibres separated from manure slurry and having been dried and compressed to a density between 400kg/m³ and 800kg/m³ as fuel in a boiler.

11. The use of a fibrous product consisting of fibres separated from manure slurry and having been dried and compressed to a density between 400kg/m³ and 800kg/m³ as a fertilizer.

12. The use according to claim 10 or 11 wherein the fibres have been subjected to a temperature above 70°C for a time sufficient to inactivate disease germs, fungus spores, and weed seeds.

13. The use of the ashes obtained in the method according to claim 5 as a fertilizer.
